# EUROPÄISCHE PATENTSCHRIFT

(11) **EP 1 416 400 B1**
(45) Veröffentlichungstag und Bekanntmachung des Hinweises auf die Patenterteilung: **19.03.2008**
(21) Anmeldenummer: 03022538.7
(22) Anmeldetag: 02.10.2003
(51) Int. Cl.: G06F 17/30, G05B 23/02

(54) **System und Verfahren zur Bereitstellung von Daten und Diensten für Geräte über öffentliche Netze, sowie Gerät, welches die bereitgestellten Daten und Dienste verwendet**
System and method for providing data and services to devices over public networks, and device using said provided data and services
Procédé et méthode de fourniture de données et de services à des appareils au travers d'un réseau publique, et appareil qui utilise les données et les services fournis

(30) Priorität: 04.11.2002 DE 10251523
(43) Veröffentlichungstag der Anmeldung: 06.05.2004
(73) Patentinhaber: SIEMENS AKTIENGESELLSCHAFT, 80333 München (DE)
(72) Erfinder: Abele, Klaus, 75428 Illingen (DE); Lagies, Knut, 70569 Stuttgart (DE)

(56) Entgegenhaltungen:
- EP-A- 0 051 861
- EP-A- 0 822 473
- WO-A-97/26587
- WO-A-03/007090
- WO-A-03/007091
- WO-A-03/007092
- WO-A-03/007097
- WO-A-03/007199
- DE-A- 19 615 190
- DE-A- 19 930 660
- US-A- 3 882 305
- ERKES J W ET AL: "IMPLEMENTING SHARED MANUFACTURING SERVICES ON THE WORLD-WIDE WEB" COMMUNICATIONS OF THE ASSOCIATION FOR COMPUTING MACHINERY, ASSOCIATION FOR COMPUTING MACHINERY. NEW YORK, US, Bd. 39, Nr. 2, 1. Februar 1996 (1996-02-01), Seiten 34-45, XP000585177 ISSN: 0001-0782

## Beschreibung

System und Verfahren zur Bereitstellung von Daten und Diensten für industrielle Steuerungen, sowie industrielle Steuerung, welches die bereitgestellten Daten und Dienste verwendet

Die Erfindung betrifft ein System und ein Verfahren zur rechnergestützten Bereitstellung von Daten und/oder Diensten über eine Datenkommunikationsverbindung für industrielle Steuerungen.

Weiterhin betrifft die Erfindung eine industrielle Steuerung, das solche über eine Datenkommunikationsverbindung bereitgestellten Daten und/oder Dienste verwendet.

Seit langem sind so genannte Client-Server-Architekturen bekannt, bei denen einem oder mehreren Clients Daten oder Dienste von einem zentralen Server zur Verfügung gestellt werden.

Es ist auch bekannt öffentliche Netze (z.B. Internet) als Übertragungsmedium für die Daten und Dienste zu benutzen, wobei die Daten und Dienste über so genannte Web-Technologien (z.B. HTTP) vom Server an die Clients übertragen werden, bzw. von einem Client vom Server angefordert werden. Die Server sind dabei üblicherweise leistungsfähige Rechenanlagen mit großer Speicherkapazität. Die Clients (Anforderer bzw. Abrufer von Daten und Diensten) können z.B. Personal Computer (PC) aber auch Geräte (z.B. periphere Geräte) sein.

Die Kopplung von einem Gerät mit einem Server (Web-Server) über das Internet kann z.B. dadurch erfolgen, dass das Gerät einen Browser (Web-Browser) besitzt mit dem Webseiten, die vom Web-Server zur Verfügung gestellt werden, herunter geladen (Download) werden.

Weiterhin ist es bekannt, die Geräte selbst mit Web-Servern auszustatten. Dadurch kann z.B. ein Personal Computer, der übers Internet mit dem Gerät verbunden ist, Gerätedaten zur Visualisierung aus den Geräten erhalten. Der Nachteil dabei ist, dass diese Ausgestaltung in bestehenden IT-Infra-strukturen von Unternehmen oder Firmen aus Sicherheitsgründen (Firewallproblematik) nicht einsetzbar ist. Es müsste nämlich ein Zugriff auf das Gerät über eine sogenannte Firewall erfolgen, wobei eine Firewall gerade so einen externen Zugriff verhindern soll.

In diesem Zusammenhang wird auf den Artikel "Implementing Shared Manufacturing Services on the World-Wide Web" von Erkes J.W. et al. in Communications of the Association for Computing Machinery, New York, US, Band 39, Nr. 2, 1. Februar 1996, Seiten 34 bis 45, XP 000585177, verwiesen, die ein System zur rechnergestützten Bereitstellung von Daten und/oder Diensten für Geräte gemäß dem Oberbegriff des Anspruchs 1 offenbart.

Außerdem wird auf die DE 196 15 190 A1 verwiesen, die eine netzwerkbasierende Steuerung für industrielle Anlagen offenbart. Zur Reduzierung des vor Ort notwendigen Hardware-Aufwandes ist die netzwerkbasierende Steuerung über Feldbusse, Kommunikationsbusse, ein internes Modem und einen Internet-kompatiblen Netzwerkanschluss in die Daten- und Prozesstechnik industrieller Anlagen eingebunden, wobei die Steuerung die Möglichkeiten verteilter Systeme, insbesondere die Leistungsmerkmale des Internets bzw. Intranets nutzt, so dass über die Feldbusanschaltung und die Kommunikationsbusse die Leistungsmerkmale herkömmlicher Steuerungstechnik erfüllt sind, und wobei die Software der netzwerkbasierenden Steuerung auf das Internet und die Steuerungsfunktionalität über den Feldbus abgestimmt ist. Die auf der netzwerkbasierenden Steuerung fest installierte Software beschränkt sich insbesondere auf ein Boot-EPROM, das unter anderem Software zum Download von Programmen aus Netzwerken beinhaltet.

Aufgabe der vorliegenden Erfindung ist es, ein System, ein Verfahren sowie ein vom System und Verfahren benutztes Gerät zur Verfügung zu stellen, die es erlauben, neue Dienste für das Gerät auch über ein öffentliches Netz mit den zugehörigen etablierten Sicherheitsstandards (z.B. Firewalls) bereitzustellen, ohne die Systemsoftware des Gerätes zu ändern, wobei es sich bei dem Gerät um eine industrielle Steuerung handelt.

Gemäß der vorliegenden Erfindung wird ein System zur rechnergestützten Bereitstellung von Daten und/oder Diensten für industrielle Steuerungenmit den Merkmalen von Anspruch 1 zur Verfügung gestellt. Die Dienste, die von einem Hauptrechner (Server) auf die im folgenden auch Gerät genannte industrielle Steuerung gebracht werden, sind in Form von Skripts definiert, die durch einen Interpreter ausgeführt werden. Ein Vorteil der Erfindung liegt darin, dass sich durch eine zeitgesteuerte Anforderung und Bereitstellung von Dienstleistungen sehr leicht Service- und Wartungspläne abarbeiten und durchführen lassen. Daten und Dienste können über ein öffentliches Netz (Internet oder öffentliches Telekommunikationsnetz) auf die Geräte gebracht werden, wobei ein hoher Sicherheitsstandard eingehalten wird. Weiterhin kann die Auslösung der skriptgesteuerten Aktivitäten durch einen Benutzer gesteuert werden. Durch diese benutzerseitige Steuerungsmöglichkeit der Ausführung von Skripts wird die Sicherheit (Schutz vor Fremdzugriff) weiter erhöht. Das erfindungsgemäße System erlaubt das sichere Anbieten von Diensten für Geräte sogar über ein öffentliches Netz unter Beibehaltung von Sicherheitsstandards, die in einer IT-Infrastruktur u.a. über Firewalls sichergestellt werden. Die Erfindung kann sehr leicht im industriellen Umfeld eingesetzt werden, bei dem recht oft Umrüstaktivitäten (Einsatz einer neuen Maschine, Herstellung eines neuen Produkts etc.) erforderlich sind. Die Umrüstaktivitäten bezüglich der Steuerungsintelligenz können durch die Erfindung somit online erfolgen und müssen nicht "physikalisch" am Gerät gemacht werden.

Eine erste vorteilhafte Ausgestaltung der Erfindung für ein System liegt darin, dass die industrielle Steuerung Mittel besitzt, um aktiv Dienste vom Hauptrechner anzufordern. Solche Mittel können z.B. Java-Script- oder TCL-Interpreter sein, die bei entsprechendem Bedarf (z.B. bei der Ausführung eine komplexen Dienstes oder Jobs) oder auf einen Benutzereingriff hin, Dienste vom Server anfordern. Das Gerät ist dabei als Client ausgebildet und fordert vom Server Dienste in einer Client-Server-Umgebung an (Dienste nimmt ein Kunde wahr; ein Skript entspricht einem Job, durch dessen Ausführung ein Dienst bewirkt wird. Skripts beinhalten eine Folge von Befehlen) .

Eine weitere vorteilhafte Ausgestaltung der Erfindung für ein System liegt darin, dass in der industriellen Steuerung die erste Verarbeitungseinrichtung und die zweite Verarbeitungseinrichtung als eine Einrichtung ausgebildet sind. Dadurch kann die Architektur des Geräts flexibel ausgelegt werden. Z.B. können beide Verarbeitungseinrichtungen jeweils in einem Modul oder in einem gemeinsamen Modul realisiert werden.

Eine weitere vorteilhafte Ausgestaltung der Erfindung für ein System liegt darin, dass die industrielle Steuerung als interaktives Gerät mit Eingabevorrichtung und Ausgabevorrichtung ausgebildet ist. Durch ein vorhandenes Human Machine Interface (Benutzerschnittstelle) kann ein Benutzer sehr leicht mit dem Gerät interagieren. Insbesondere kann damit ein Benutzer sehr leicht die Ausführung von Skripts steuern. Dadurch wird der Sicherheitsstandard weiter erhöht und insbesondere die Wirkung der Dienste (durch die gesteuerte Ausführung der Skripts) für den Bediener transparent. Eingabevorrichtungen sind z.B. Tastatur und Maus, eine Ausgabevorrichtung kann z.B. ein Bildschirm sein.

Eine weitere vorteilhafte Ausgestaltung der Erfindung für ein System liegt darin, dass seitens der industriellen Steuerung die Anforderung der Daten und/oder Dienste in Abhängigkeit des Zustands der industriellen Steuerung erfolgt. Dadurch können vom Gerät in Abhängigkeit des Zustands des Geräts oder in Abhängigkeit des Zustands von Komponenten des Geräts Service- und Wartungsdienstleistungen vom Server abgerufen werden.

Eine weitere vorteilhafte Ausgestaltung der Erfindung für ein System liegt darin, dass die Bereitstellung der Daten und/oder Dienste ereignisgesteuert erfolgt. Durch eine ereignisgesteuerte Anforderung und Bereitstellung von Dienstleistungen wird beim Eintreffen von Ereignissen auf definierte und wiederholbare Weise reagiert.

Gemäß der vorliegenden Erfindung wird eine industrielle Steuerung zur Ausführung von Diensten, die über einen Hauptrechner bereitstellbar sind, mit den Merkmalen des Anspruchs 6 zur Verfügung gestellt. Die Dienste, die von einem Hauptrechner (Server) auf die industrielle Steuerung gebracht werden, sind in Form von Skripts definiert, die durch einen Interpreter ausgeführt werden. Ein Vorteil der Erfindung liegt darin, dass sich durch eine zeitgesteuerte Anforderung und Bereitstellung von Dienstleistungen sehr leicht Service- und Wartungspläne abarbeiten und durchführen lassen. Daten und Dienste können über ein öffentliches Netz (Internet oder öffentliches Telekommunikationsnetz) auf die Geräte gebracht werden, wobei ein hoher Sicherheitsstandard eingehalten wird. Weiterhin kann die Auslösung der skriptgesteuerten Aktivitäten durch einen Benutzer gesteuert werden. Durch diese benutzerseitige Steuerungsmöglichkeit der Ausführung von Skripts wird die Sicherheit (Schutz vor Fremdzugriff) weiter erhöht. Das erfindungsgemäße System erlaubt das sichere Anbieten von Diensten für Geräte sogar über ein öffentliches Netz unter Beibehaltung von Sicherheitsstandards, die in einer IT-Infrastruktur über Firewalls sichergestellt werden, wobei Firewalls aber gerade einen dazu notwendigen externen Zugriff auf das Gerät verhindern.

Die Erfindung kann sehr leicht im industriellen Umfeld eingesetzt werden, bei dem recht oft Umrüstaktivitäten (Einsatz einer neuen Maschine, Herstellung eines neuen Produkts etc.) erforderlich sind. Die Umrüstaktivitäten bezüglich der Steuerungsintelligenz können durch die Erfindung somit online erfolgen und müssen nicht "physikalisch" am Gerät gemacht werden.

Eine erste vorteilhafte Ausgestaltung der Erfindung für eine industrielle Steuerungliegt darin, dass die industrielle Steuerung Mittel besitzt, um aktiv Dienste vom Hauptrechner anzufordern. Solche Mittel können z.B. Java-Script- oder HTML-Interpreter sein, die bei entsprechendem Bedarf (z.B. bei der Ausführung eine komplexen Dienstes oder Jobs) oder auf einen Benutzereingriff hin, Dienste vom Server anfordern. Das Gerät ist dabei als Client ausgebildet und fordert vom Server Dienste in einer Client-Server-Umgebung an (Dienste nimmt ein Kunde wahr; ein Skript entspricht einem Job, durch dessen Ausführung ein Dienst bewirkt wird. Skripts beinhalten eine Folge von Befehlen).

Eine weitere vorteilhafte Ausgestaltung der Erfindung für eine industrielle Steuerung liegt darin, dass die industrielle Steuerungals interaktives Gerät mit Eingabevorrichtung und Ausgabevorrichtung ausgebildet ist. Durch ein vorhandenes Human Machine Interface (HMI) kann ein Benutzer sehr leicht mit dem Gerät interagieren. Insbesondere kann damit ein Benutzer sehr leicht die Ausführung von Skripts steuern. Dadurch wird der Sicherheitsstandard weiter erhöht und insbesondere die Wirkung der Dienste (durch die gesteuerte Ausführung der Skripts) für den Bediener transparent. Eingabevorrichtungen sind z.B. Tastatur und Maus, eine Ausgabevorrichtung kann z.B. ein Bildschirm sein.

Eine weitere vorteilhafte Ausgestaltung der Erfindung für eine industrielle Steuerung liegt darin, dass die erste Verarbeitungseinrichtung und die zweite Verarbeitungseinrichtung als eine Einrichtung ausgebildet sind. Dadurch kann die Architektur des Geräts flexibel ausgelegt werden. Z.B. können beide Verarbeitungseinrichtungen jeweils in einem Modul oder in einem gemeinsamen Modul realisiert werden.

Eine weitere vorteilhafte Ausgestaltung der Erfindung für eine industrielle Steuerung liegt darin, dass die Anforderung der Daten und/oder Dienste in Abhängigkeit des Zustands der industriellen Steuerung erfolgt. Dadurch können vom Gerät in Abhängigkeit des zustands des Geräts oder in Abhängigkeit des Zustands von Komponenten des Geräts Service- und Wartungsdienstleistungen vom Server abgerufen werden.

Eine weitere vorteilhafte Ausgestaltung der Erfindung für eine industrielle Steuerung liegt darin, dass die Bereitstellung der Daten und/oder Dienste ereignisgesteuert erfolgt. Durch eine ereignisgesteuerte Anforderung und Bereitstellung von Dienstleistungen wird beim Eintreffen von Ereignissen auf definierte und wiederholbare Weise reagiert.

Gemäß der vorliegenden Erfindung wird ein Verfahren zur rechnergestützten Bereitstellung und/oder Ausführung von Daten und/oder Diensten mit den Merkmalen von Anspruch 11 zur Verfügung gestellt. Die Dienste, die von einem Hauptrechner (Server) auf das Gerät gebracht werden, sind in Form von Skripts definiert, die durch Interpreter ausgeführt werden. Ein Vorteil der Erfindung liegt darin, dass sich durch eine zeitgesteuerte Anforderung und Bereitstellung von Dienstleistungen sehr leicht Service- und Wartungspläne abarbeiten und durchführen lassen. Daten und Dienste können über ein öffentliches Netz (Internet oder öffentliches Telekommunikationsnetz) auf die Geräte gebracht werden, wobei ein hoher Sicherheitsstandard eingehalten wird. Wenn das Gerät als sogenannter Interactive Client, d.h. das Gerät kann mit einem Benutzer interagieren, ausgebildet ist, kann die Auslösung der skriptgesteuerten Aktivitäten durch einen Benutzer gesteuert werden. Durch diese benutzerseitige Steuerungsmöglichkeit der Ausführung von Skripts wird die Sicherheit (Schutz vor Fremdzugriff) weiter erhöht.

Dadurch dass der Dienst eine eineindeutige Kennung des Geräts beinhaltet kann ein Dienst überhaupt erst ausgeführt werden, denn ohne diese eindeutige Gerätekennung würde der Server nicht wissen für welches Gerät der Dienst bereitgestellt werden soll. Außerdem ist diese Kennung wichtig, um einen Dienst gerätespezifisch abrechnen zu können.

Dass die Verarbeitungseinrichtung die Ausführung eines Dienstes an die weitere Verarbeitungseinrichtung meldet, hat den Vorteil, dass die weitere Verarbeitungseinrichtung eine entsprechende Anforderung an den Server senden kann, der diese z.B. zur Anzeige der Ergebnisse auf einer Ausgabeeinheit (z.B. Bildschirm) benutzen kann.

Eine erste vorteilhafte Ausgestaltung der Erfindung für ein Verfahren liegt darin, dass die Anforderung eines Dienstes durch eine als interaktives Gerätausgebildete industrielle Steuerung mit Benutzerschnittstelle erfolgt. Durch ein vorhandenes Human Machine Interface (HMI) kann ein Benutzer sehr leicht mit dem Gerät interagieren. Insbesondere kann damit ein Benutzer sehr leicht die Ausführung von Skripts steuern. Dadurch wird der Sicherheitsstandard weiter erhöht und insbesondere die Wirkung der Dienste (durch die gesteuerte Ausführung der Skripts) für den Bediener transparent.

Eine weitere vorteilhafte Ausgestaltung der Erfindung für ein Verfahren liegt darin, dass die Dienste durch Skriptsprachen definiert werden und die Verarbeitungseinrichtung und die weitere Verarbeitungseinrichtung Mittel zum Ausführen der Skripts enthalten. In einem Skript werden Handlungsabläufe beschrieben, die von einem entsprechenden Interpreter "Anweisung für Anweisung" ausgeführt werden. Durch den Einsatz von Skript-Sprachen ist es möglich, sehr einfach Interaktionen zwischen Anwendungen zu programmieren. Außerdem kann durch den Einsatz von Skriptsprachen ein Benutzer sehr einfach individuelle Anpassungen an den Anwendungen vornehmen. Bekannte Skriptsprachen sind Visual Basic Script und Java Skript. Das Öffnen einer Skriptdatei bewirkt den Start des dazugehörigen Interpreters und das Ausführen des Skriptprogramms. Ein Interpreter analysiert Anweisung für Anweisung ein Quellprogramm (liegt in der Skriptsprache in einer Skriptdatei vor) und führt eine analysierte Anweisung sofort durch ein Laufzeitsystem sofort aus. Ein Interpreter zerlegt dabei schrittweise die Quellsprachenanweisungen in ihre elementaren Bestandteile, überprüft ihre Syntax und führt für jedes Bestandteil unmittelbar Zielsprachenanweisungen aus. Wegen der unmittelbaren Ausführung benötigt ein Interpreter neben dem Quellprogramm auch die dazugehörigen Daten. Ein Vorteil des Einsatzes von Skriptsprachen und Interpreter liegt in der Flexibilität, Einfachheit und Schnelligkeit einer interaktiven Programm- bzw. Diensterstellung.

Eine weitere vorteilhafte Ausgestaltung der Erfindung für ein Verfahren liegt darin, dass die Daten und/oder Dienste in Abhängigkeit des Zustands der industriellen Steuerung angefordert werden. Dadurch können vom Gerät in Abhängigkeit des Zustands des Geräts oder in Abhängigkeit des Zustands von Komponenten des Geräts Service- und Wartungsdienstleistungen vom Server abgerufen werden.

Eine weitere vorteilhafte Ausgestaltung der Erfindung für ein Verfahren liegt darin, dass die Bereitstellung der Daten und/oder Dienste ereignisgesteuert erfolgt. Durch eine ereignisgesteuerte Anforderung und Bereitstellung von Dienstleistungen wird beim Eintreffen von Ereignissen auf definierte und wiederholbare Weise reagiert.

Ein Server wird als Dienstprovider angesehen. Es kann sich in dieser Funktion auch um mehrere Server bzw. Rechner mit Serverfunktionalität handeln. D.h. ein Server kann auch als ein Verbund von Servern ausgestaltet sein.

Weitere Vorteile und Details der Erfindung ergeben sich anhand der nun folgenden Beschreibung vorteilhafter Ausführungsbeispiele und in Verbindung mit den Figuren. Soweit in unterschiedlichen Figuren Elemente mit gleichen Funktionalitäten beschrieben sind, sind diese mit gleichen Bezugszeichen gekennzeichnet.

Es zeigen:
- FIG 1: eine Schemadarstellung des erfindungsgemäßen Systems,
- FIG 2 - 11: ein Szenario für den Gebrauch des erfindungsgemäßen Systems, Verfahrens und Geräts.

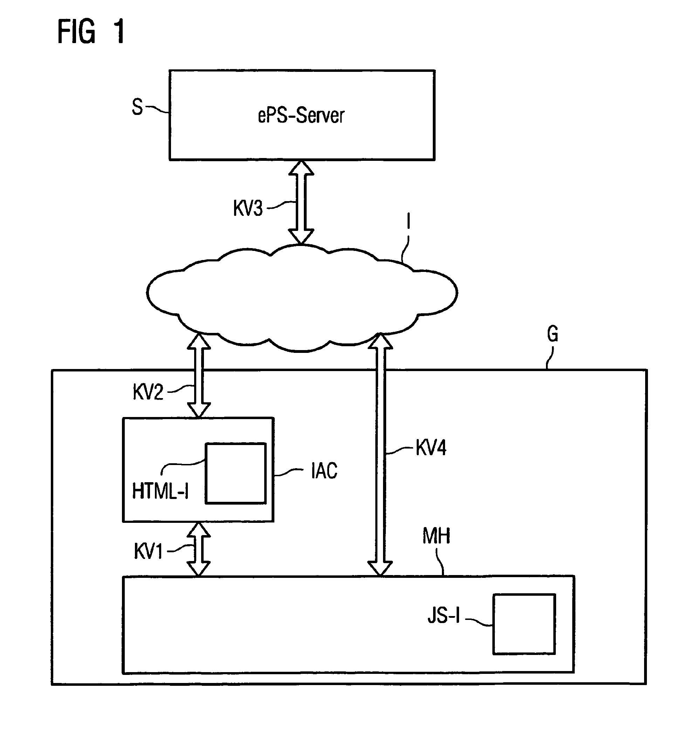

Die Darstellung gemäß FIG 1 zeigt eine Schemadarstellung des erfindungsgemäßen Systems. Das System besteht aus einem Hauptrechner S, in FIG 1 als ePS-Server bezeichnet, sowie einem Gerät G, das eine Verarbeitungseinrichtung MH und eine weitere Verarbeitungseinrichtung IAC beinhaltet. Die Verarbeitungseinrichtung MH ist mit der weiteren Verarbeitungseinrichtung IAC über die Kommunikationsverbindung KV1 verbunden. Der Hauptrechner S ist über ein öffentliches Kommunikationsnetz I mit dem Gerät G verbunden. Ein solches öffentliches Netz kann z.B. das Internet oder ein anderes öffentliches Kommunikationsnetz sein. Es ist aber auch vorstellbar, dass der Hauptrechner S mit dem Gerät über ein firmeninternes Netz (z.B. Intranet oder LAN) verbunden ist. Über die Kommunikationsverbindungen KV2, KV3 und KV4 wird dargestellt, wie der Hauptrechner (Server) S, die Verarbeitungseinrichtung MH und die weitere Verarbeitungseinrichtung IAC an das öffentliche Netz angeschlossen sind.

Das Gerät G kann als so genannter Interactive Client, d.h. mit Eingabe- und Ausgabeeinheiten versehen, ausgebildet sein, damit ein Bediener die Ausführung der Skripts durch Eingaben steuern kann.

Die vorliegende Erfindung erlaubt es, für Geräte, insbesondere embedded Geräte, Dienstleistungen über ein öffentliches Netz I durch andere Rechner S anzubieten, wobei die technischen Eigenschaften (Daten, Funktionen) dieser Geräte benutzt werden. Die vorgeschlagene Erfindung erlaubt es, über die Verarbeitungseinrichtung (Machine Handler) MH Skripts vom Hauptrechner (Server) S zu laden und auf dem Gerät auszuführen, wobei der Zugriff auf Daten und Funktionen mit Geräte lokaler Intelligenz ermöglicht wird. Wenn als Verbindungsmedium zwischen Hauptrechner (Server) S und dem Gerät G ein öffentliches Netz I benutzt wird, besteht die Gefahr der mangelnden Sicherheit, d.h., dass unberechtigte Dritte manipulierend eingreifen. Die erfindungsgemäße Systemarchitektur erlaubt es nun, als Verbindungsmedium zwischen Hauptrechner S und Gerät G ein öffentliches Netz I zu verwenden und dabei eine ausreichende Sicherheit sicherzustellen. Über die weitere Verarbeitungseinrichtung IAC kann ein Bediener über geeignete Eingabehilfsmittel (z.B. Keyboard, Maus, etc.) das Auslösen solcher skriptgesteuerten Aktivitäten, die wegen der Sicherheitsarchitektur gegenüber öffentlichen Netzen nicht den Zugriff von außen gestatten, kontrollieren. Bei entsprechender Konfiguration kann die Verarbeitungseinrichtung (Machine Handler) MH auch selbsttätig in bestimmten Intervallen oder durch Ereignisse ausgelöst neue Dienste oder Jobs (in Form von Skripts) vom Hauptrechner (Server) S anfordern. Es ist auch vorstellbar, dass die Verarbeitungseinrichtung (Machine Handler) MH die weitere Verarbeitungseinrichtung IAC über das Ende seiner Aktivitäten für eine bestimmte Aufgabe informiert. Damit kann die weitere Verarbeitungseinrichtung IAC eine entsprechende Anforderung (Request) an den Hauptrechner (Server) S senden, der diese wiederum z.B. zur Anzeige von Ergebnissen auf der Benutzerschnittstelle benutzen kann.

Vom Hauptrechner (Server, ePS Server) S können Daten und Dienste über das öffentliche Netz I auf das Gerät G geschickt werden. Solche Dienste können z.B. vom Gerät angeforderte neue Dienste bzw. Jobs sein. Diese Jobs werden in Form von Skripts auf das Gerät G geladen. Das Gerät G verfügt über Mittel JS-I und HTML-I zum Interpretieren und Ausführen dieser Skripts. In FIG 1 ist dargestellt, dass die Verarbeitungseinrichtung (Machine Handler) MH einen HTML-Interpreter HTML-I enthält und dass die weitere Verarbeitungseinrichtung IAC einen Java Skript Interpreter JS-I enthält.

Das erfindungsgemäße Gerät kann z.B. ein peripheres Gerät (Drucker oder Ausgabeeinheit) sein. Es wird aber meistens als embedded Gerät ausgebildet sein. Im Bereich der industriellen Automatisierungstechnik und insbesondere auf dem Gebiet numerisch gesteuerter Bearbeitungsmaschinen bieten Hersteller Service in Form von Steuerungstechnologie und entsprechenden Softwarekomponenten oder embedded Geräten G für andere Hersteller von Originalzubehör (so genannte Original Equipment Manufacturer OEM) an, welche industrielle Bearbeitungsmaschinen herstellen und vermarkten. Mit Hilfe der vorliegenden Erfindung ist es möglich, einem Endkunden, der von einem OEM z.B. eine Maschine erworben hat, Dienstleistungen (Services) und maschinenbezogenes Know-how für in der erworbenen Maschine vorhandene embedded Geräte zur Verfügung zu stellen. Dadurch kann z.B. die Verfügbarkeit der Maschinen, deren Lebensdauer und ihre Produktivität entscheidend verbessert werden. Weiterhin stellt die vorliegende Erfindung sicher, dass diese Dienstleistungen bzw. das Know-how über ein öffentliches Netz unter einem hohen Sicherheitsstandard auf das Gerät gebracht werden können.

Die Verarbeitungseinrichtungen MH und IAC können als getrennte Module ausgebildet sein, sie können aber auch in einem Modul integriert sein. Weiterhin kann die Verarbeitungseinrichtung (Machine Handler) MH mit einer industriellen Steuerung IS (SPS oder Motion Control) gekoppelt sein, es ist aber auch möglich, dass die Verarbeitungseinrichtung (Machine Handler) MH in einer industriellen Steuerung IS oder einem anderen Gerät integriert ist.

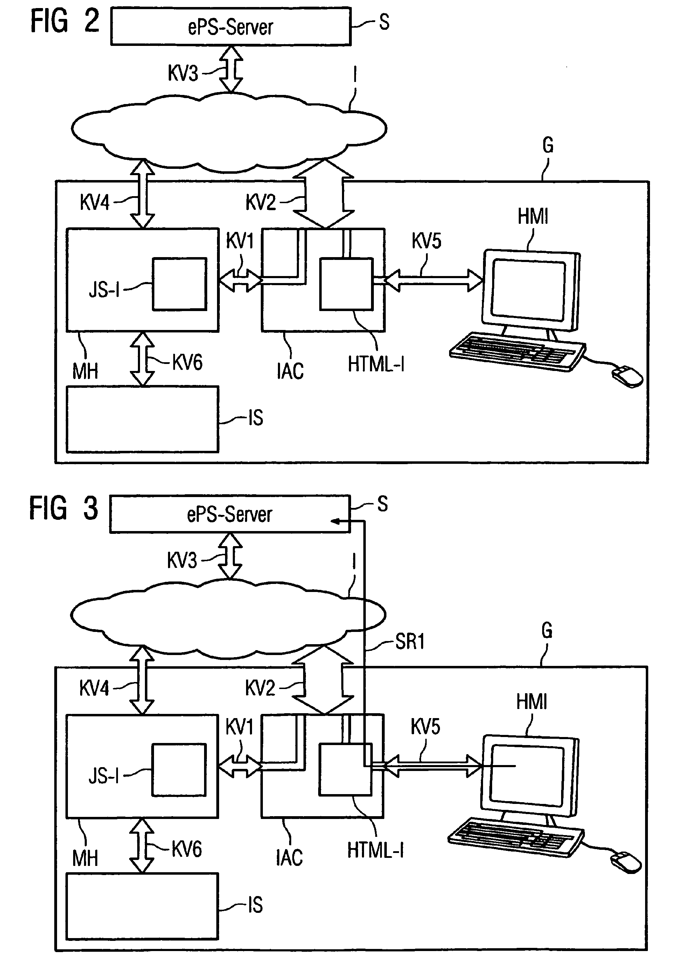

Die Darstellungen gemäß FIG 2 bis FIG 11 zeigen ein Szenario für den Gebrauch des erfindungsgemäßen Systems, Verfahrens und Geräts dargestellt. In der Darstellung gemäß FIG 2 ist dargestellt, wie der Hauptrechner (ePS-Server) S über ein öffentliches Netz (Internet) I mit einem interaktiven Gerät G verbunden ist. Der Hauptrechner S ist über die Kommunikationsverbindung KV3 am öffentlichen Netz I angeschlossen. Geräteseitig sind die Verarbeitungseinrichtung (Machine Handler) MH und die weitere Verarbeitungseinrichtung IAC über die Kommunikationsverbindungen KV4 bzw. KV2 am öffentlichen Netz I angeschlossen. Die weitere Verarbeitungseinrichtung IAC ist über die Kommunikationsverbindung KV5 mit einem HMI (Bedieneinrichtung mit Ein- und Ausgabemitteln) angeschlossen. Über diese Benutzerschnittstelle HMI kann ein Benutzer mit dem Gerät interagieren und dabei die Ausführung von Skripts steuern. Über die Kommunikationsverbindung KV1 ist die weitere Verarbeitungseinrichtung IAC mit der Verarbeitungseinrichtung MH verbunden. Über die Kommunikationsverbindung KV6 ist die Verarbeitungseinrichtung (Machine Handler) MH mit einem weiteren Gerät IS verbunden. Dieses weitere Gerät IS kann z.B. eine industrielle Steuerung oder ein anderes peripheres Gerät sein. Über die Kommunikationsverbindung KV2 werden üblicherweise Webseiten (vorzugsweise in HTML oder einer anderen markup language) transportiert. Webseiten vom Hauptrechner (ePS-Server) S an die weitere Verarbeitungseinrichtung IAC enthalten üblicherweise auch Kommandos für die weitere Verarbeitungseinrichtung IAC. Über die Kommunikationsverbindung KV4 wird üblicherweise Java Skript Code transportiert.

Die in FIG 2 bis FIG 11 beschriebenen Schritte eines Szenarios werden über Pfeile SR1 - SR9 dargestellt.

In FIG 3 wird der erste Schritt des Szenarios über den Pfeil SR1 dargestellt: Die weitere Verarbeitungseinrichtung IAC ruft auf dem Hauptrechner (ePS-Server) S eine Webseite mit Funktion auf.

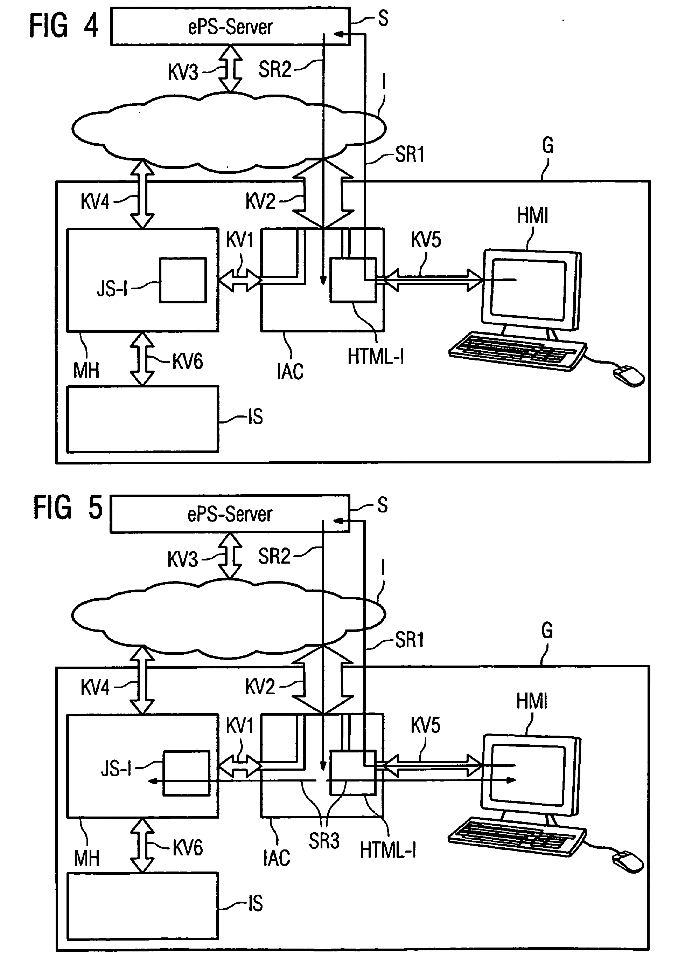

FIG 4 zeigt den zweiten Schritt des Szenarios, dargestellt durch den Pfeil SR2: Der Hauptrechner (ePS-Server, Web-Server) S antwortet mit einer Webseite, die ein Kommando an die Verarbeitungseinrichtung (Machine Handler) MH enthält. Der Web-Server S erzeugt einen Job mit Job IDs und wartet auf Job-Anforderung durch die weitere Verarbeitungseinrichtung IAC. Der Web-Server S wartet also auf einen Request von der weiteren Verarbeitungseinrichtung IAC, durch den das Gerät G als Client den Job, der einen Dienst repräsentiert, anfordert.

In FIG 5 ist durch die zwei Pfeile SR3 der dritte Schritt des Szenarios dargestellt: Durch den rechts gerichteten Pfeil SR3 wird dargestellt, dass die Webseite im HTML-Format zum Interpreter HMTL-I und damit zur Anzeige HMI gelangt. Durch den links gerichteten Pfeil SR3 wird dargestellt, dass ein Kommando an die Verarbeitungseinrichtung (Machine Handler) MH abgesetzt wird mit der Aufforderung, den im Web-Server S bereitgestellten Job anzufordern.

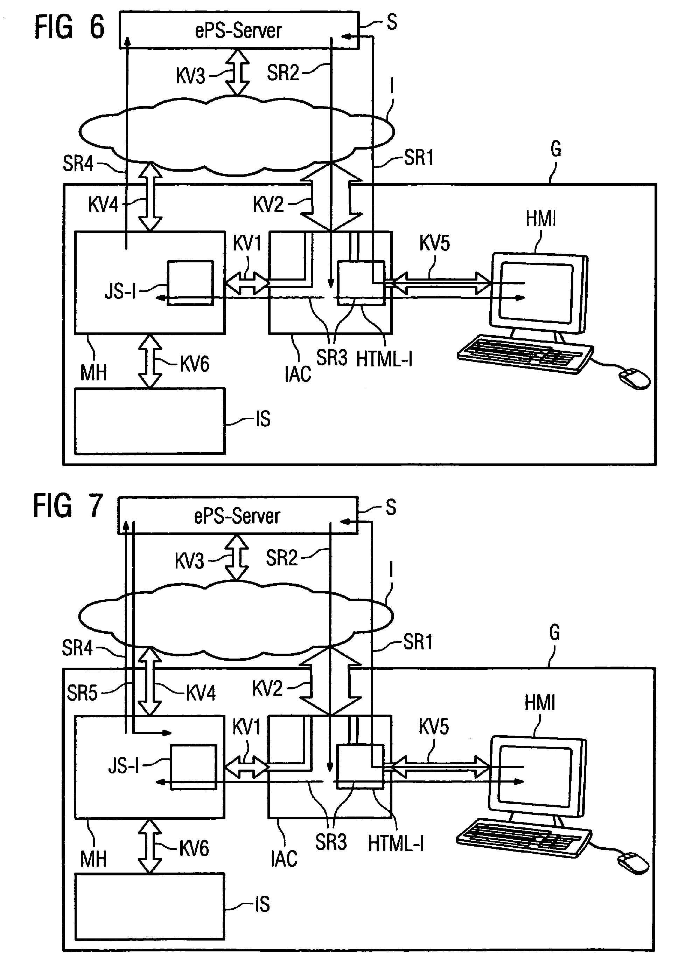

In FIG 6 wird durch den Pfeil SR4 der vierte Schritt im Szenario dargestellt: Die Verarbeitungseinrichtung (Machine Handler) MH fordert vom Web-Server S den bereitgestellten Job über eine Machine ID (eindeutige Gerätekennung) und Job ID an. Durch die Job ID wird der bereitgestellte Job (Dienst) eineindeutig identifiziert, durch die Machine ID wird das Gerät eineindeutig identifiziert.

In FIG 7 wird durch den Pfeil SR5 der fünfte Schritt im Szenario dargestellt: Der Web-Server S lädt den Job (Dienst) auf die Verarbeitungseinrichtung (Machine Handler) MH und diese Verarbeitungseinrichtung führt den Job (Dienst) aus. Die Ausführung erfolgt durch den Java Skript Interpreter JS-I.

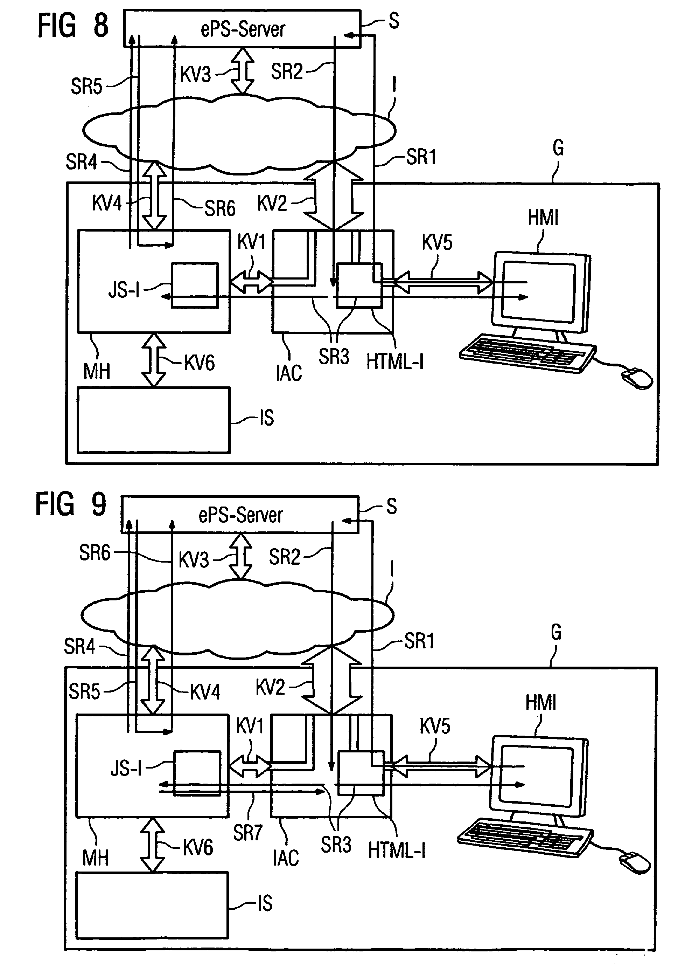

In FIG 8 wird durch den Pfeil SR6 der sechste Schritt im Szenario dargestellt: Je nachdem, wie der Job konfiguriert ist und welche Aufgaben er zu erfüllen hat, lädt er Daten, Statusinformationen und Fehlermeldungen zum Web-Server S.

In FIG 9 wird durch den Pfeil SR7 der siebte Schritt im Szenario dargestellt: Die Verarbeitungseinrichtung (Machine Handler) MH meldet an die weitere Verarbeitungseinrichtung IAC, dass der Job beendet ist.

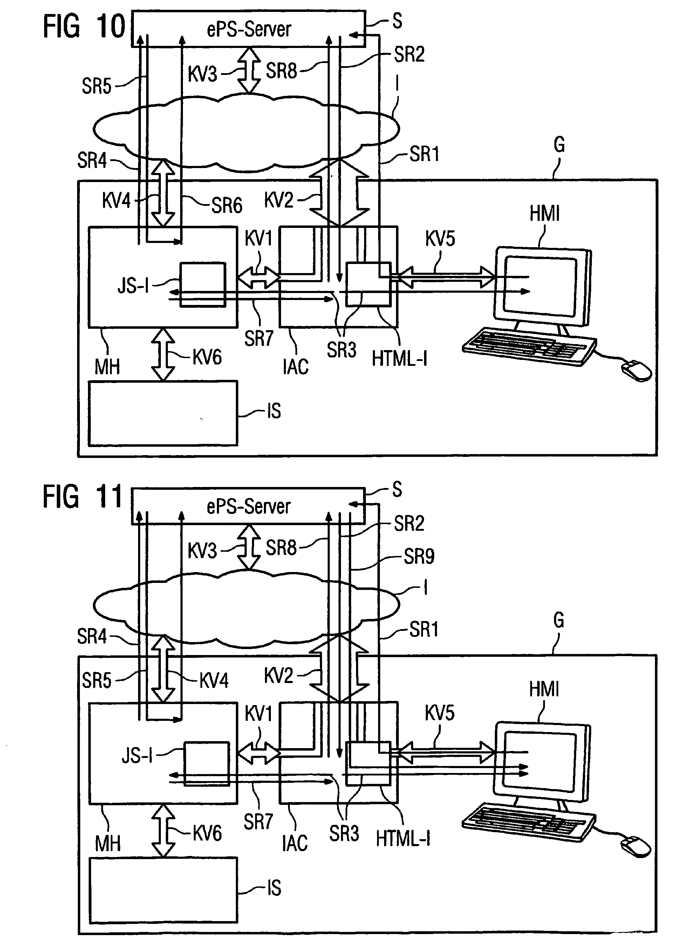

In FIG 10 wird durch den Pfeil SR8 der achte Schritt im Szenario dargestellt: Die weitere Verarbeitungseinrichtung IAC fordert vom Web-Server S die nächste Webseite an.

In FIG 11 ist durch den Pfeil SR9 der neunte Schritt im Szenario dargestellt: Der Web-Server S sendet eine neue Webseite zur weiteren Verarbeitungseinrichtung IAC z.B. mit den Ergebnissen der durchgeführten Jobs. Diese Ergebnisse werden an der Benutzerschnittstelle HMI dargestellt. Zur Darstellung kann z.B. ein gängiger Web-Browser (Standard-Browser) verwendet werden.

Der Hauptrechner (ePS-Server) S ist üblicherweise als Web-Server ausgebildet oder er enthält einen Web-Server mit der für einen Web-Server üblichen Funktionalität, nämlich Speichern und Bereitstellen von Webseiten in einem für den Gebrauch des Internets üblichen Format (z.B. HTML oder eine andere markup language wie z.B. XML). Die Ausführung der Dienste oder Jobs kann auch zeitgesteuert, periodisch oder in Abhängigkeit des Zustands des Gerätes oder in Abhängigkeit des Zustands eines angeschlossenen weiteren Gerätes wie z.B. einer industriellen Steuerung IS erfolgen. Ein Server hat üblicherweise eine große Plattenkapazität oder Prozessorleistung und stellt Infrastrukurdienste (z.B. Anbindung an SMS-oder email-Provider) für die Clients zur Verfügung.

Das Gerät kann als interaktives Gerät, d.h. mit Benutzerschnittstelle HMI, ausgebildet sein, es kann aber auch ohne Benutzerschnittstelle HMI auskommen.

Folgende wesentliche Vorteile ergeben sich aus der Erfindung: Für Geräte kann über ein öffentliches Netz (z.B. Internet) Dienstleistungen erbracht werden, denn die erfindungsgemäße Lösung ist verträglich mit dem Stand der Sicherheitstechnik. Ein weiterer Vorteil liegt darin, dass, wenn neue Dienste entwickelt werden, diese allein über nachladbare Skripts über das Gerät benutzt werden können, ohne die Systemsoftware des Geräts zu ändern. Außerdem kann die Interaktion mit einem Bediener für einen gegebenen Dienst (Job) über das Zusammenwirken von Verarbeitungseinrichtung (Machine Handler) MH und weiterer Verarbeitungseinrichtung IAC behandelt werden.

Ein weiterer Vorteil liegt darin, dass das Gerät "klein" gehalten werden kann, da die ressourcenverzehrenden Anteile der Dienste (Speicherplatz, Prozessorleistung) auf dem Server ausgeführt werden. Das ist ein Vorteil gegenüber Geräten oder Steuerungen mit integrierten Webservern.

Die vorliegende Erfindung erlaubt es Geräte als "thin clients" auszugestalten. Das hat den Vorteil, dass die Geräte weniger Hardware, weniger Speicherplatz, weniger Rechenleistung und weniger Raum benötigen. Daraus ergibt sich ein Kostenvorteil.

Alle Aktivitäten gehen vom Gerät aus, entweder durch den Bediener ausgelöst oder durch Softwarebausteine (Module), die ein Polling am Server ausführen.

Typische Dienste, die von einem Gerät G vom Server S angefordert werden, sind z.B. das Senden von emails oder SMS bei A-larmereignissen an den Menschen, die Ablage von Zustandsinformation im Fehlerfall des Geräts G auf dem Server S, die Ablage von Archivdaten und Konfigurationsdaten aus dem Gerät auf dem Server oder eine SW-Installation auf dem Gerät automatisieren (Install-shield wie beim PC bekannt).

Durch die Konfiguration des erfindungsgemäßen Systems und die Architektur des erfindungsgemäßen Gerätes wird eine sichere Kommunikation mit Geräten ermöglicht. D.h. es wird ein hoher Sicherheitsstandard auch bei der Benutzung eines öffentlichen Netzes (z.B. Internet) als Kommunikationsmedium ermöglicht. In bestehenden IT-Infrastrukturen ist wegen der üblicherweise eingesetzten Firewalls ein Zugriff auf Geräte von Außen überhaupt nicht, oder nur sehr schwer und aufwendig möglich, da die Firewalls erst überwunden werden muss. Ein Firewall soll ja solche externen Zugriffe vermeiden.

Das in den Fig 2 - 11 beschriebene Ablaufsszenario kann auch als ein Protokoll für die oben erwähnte sichere Kommunikation angesehen werden.

Das erfindungsgemäße Gerät wird hauptsächlich als Client verwendet, es ist aber auch denkbar, dass das Gerät Serverfunktionalität aufweisen kann.

## Patentansprüche

1. System zur rechnergestützten Bereitstellung von Daten und/oder Diensten für Geräte (G), bestehend aus:
- mindestens einem Hauptrechner (S) mit Mitteln zur Speicherung und Bereitstellung der Daten und/oder Dienste,
- mindestens einem Gerät (G) mit folgenden Merkmalen:
- das Gerät (G) enthält eine erste Verarbeitungseinrichtung (MH) mit Mitteln (JS-I) zur Ausführung von Skripts, und
- eine zweite Verarbeitungseinrichtung (IAC) mit Mitteln (HTML-I) zur Darstellung von Daten und/oder zur Benutzerinteraktion (HMI), wobei die zweite Verarbeitungseinrichtung (IAC) mit dem Hauptrechner (S) über eine erste bidirektionale Datenkommunikationsverbindung (KV2, I, KV3) verbunden ist,
wobei die Dienste in Form von Skripts definiert sind und eine eineindeutige Kennung des Geräts (G) beinhalten,
**dadurch gekennzeichnet, dass** es sich bei dem Gerät (G) um eine industrielle Steuerung handelt,
und dass die erste Verarbeitungseinrichtung (MH) mit dem Hauptrechner (S) über eine zweite bidirektionale Datenkommunikationsverbindung (KV4, I, KV3) verbunden ist,
und dass die erste Verarbeitungseinrichtung (MH) so konfiguriert ist, dass sie selbsttätig Daten und/oder Dienste vom Hauptrechner (S) anfordert, wobei die Anforderung zeitgesteuert erfolgt, und **dass** sie die zweite Verarbeitungseinrichtung (IAC) über das Ende ihrer Aktivitäten für eine bestimmte Aufgabe informiert.

2. System nach Anspruch 1,
**dadurch gekennzeichnet, dass**
**die industrielle Steuerung** (G) Mittel (JS-I, HTML-I) besitzt, um aktiv Dienste vom Hauptrechner (S) anzufordern.

3. System nach Anspruch 1 oder 2,
**dadurch gekennzeichnet, dass**
**die industrielle** Steuerung (G) als interaktives Gerät (HMI) mit Eingabevorrichtung und Ausgabevorrichtung ausgebildet ist.

4. System nach einem der Ansprüche 1 bis 3,
**dadurch gekennzeichnet, dass**
**seitens der industriellen** Steuerung die Anforderung der Daten und/oder Dienste in Abhängigkeit des **Zustands der** industriellen Steuerung (G) erfolgt.

5. System nach einem der Ansprüche 1 bis 4,
**dadurch gekennzeichnet, dass**
die Bereitstellung der Daten und/oder Dienste ereignisgesteuert erfolgt.

6. Industrielle Steuerungsvorrichtung (G) zur Ausführung von Diensten, die über einen Hauptrechner (S) bereitstellbar sind, mit den folgenden Merkmalen:
- eine erste Verarbeitungseinrichtung (MH) mit Mitteln (JS-I) zur Ausführung von Skripts und
- eine zweite Verarbeitungseinrichtung (IAC) mit Mitteln (HTML-I) zur Darstellung von Daten und/oder zur Benutzerinteraktion (HMI), wobei die zweite Verarbeitungseinrichtung (IAC) mit dem Hauptrechner (S) über eine erste bidirektionale Datenkommunikationsverbindung (KV2, I, KV3) verbunden ist,
wobei die Dienste in Form von Skripts definiert sind und eine eineindeutige Kennung der industriellen Steuerung(G) beinhalten,
**dadurch gekennzeichnet, dass**
die erste Verarbeitungseinrichtung (MH) mit dem Hauptrechner (S) über eine zweite bidirektionale Datenkommunikatonsverbindung (KV4, I, KV3) verbunden ist,
und dass die erste Verarbeitungseinrichtung (MH) so konfiguriert ist, dass sie selbsttätig Daten und/oder Dienste vom Hauptrechner (S) anfordert, wobei die Anforderung zeitgesteuert erfolgt, und dass sie die zweite Verarbeitungseinrichtung
(IAC) über das Ende ihrer Aktivitäten für eine bestimmte Aufgabe informiert.

7. Industrielle Steuerungsvorrichtung (G) nach Anspruch 6,
**dadurch gekennzeichnet, dass** die industrielle Steuerung (G) Mittel (JS-I, HTML-I) besitzt, um aktiv Dienste vom Hauptrechner (S) anzufordern.

8. Industrielle Steuerungsvorrichtung (G) nach Anspruch 6 oder 7,
**dadurch gekennzeichnet, dass**
die industrielle Steuerung als interaktives Gerät (HMI) mit Eingabevorrichtung und Ausgabevorrichtung ausgebildet ist.

9. Industrielle Steuerungsvorrichtung (G) nach einem der Ansprüche 6 bis 8,
**dadurch gekennzeichnet, dass**
die Anforderung der Daten und/oder Dienste in Abhängigkeit des Zustands der industriellen Steuerung (G) erfolgt.

10. **Industrielle Steuerungsvorrichtung** (G) nach einem der Ansprüche 6 bis 9,
**dadurch gekennzeichnet, dass**
die Bereitstellung der Daten und/oder Dienste ereignisgesteuert erfolgt.

11. Verfahren zur rechnergestützten Bereitstellung und/oder Ausführung von Daten und/oder Diensten für eine industrielle Steuerung, wobei ein Hauptrechner (S) und seitens der industriellen Steuerung eine Verarbeitungseinrichtung (MH) und eine weitere Verarbeitungseinrichtung (IAC) über Datenkommunikationsverbindungen (I, KV1-KV6) kommunizieren und der Dienst eine eineindeutige Kennung der industriellen Steuerung (G) beinhaltet, mit den folgenden Verfahrensschritten:
- die industrielle Steuerung (G) macht selbsttätig eine Anforderung an den Hauptrechner (S) zur Bereitstellung von Daten und/oder Diensten, wobei die Anforderung zeitgesteuert erfolgt.
- der Hauptrechner (S) sendet der weiteren Verarbeitungseinrichtung (IAC) über eine erste bidirektionale Datenkommunikationsverbindung (KV2, I, KV3) Daten, die diese analysiert und an die Verarbeitungseinrichtung (MH) und/oder an ein Benutzerterminal (HMI) weiterleitet,
- die Verarbeitungseinrichtung (MH) analysiert die empfangenen Daten
**dadurch gekennzeichnet, dass**
- die Verarbeitungseinrichtung (MH) auf der Basis dieser Daten über eine zweite bidirektionale Datenkommunikationsverbindung (KV4, 1, KV3) vom Hauptrechner (S) entsprechende Dienste anfordert,
- der Hauptrechner (S) die Dienste über die zweite bidirektionale Datenkommunikationsverbindung (KV4, I, KV3) auf die Verarbeitungseinrichtung (MH) lädt,
- die Verarbeitungseinrichtung (MH) die Dienste ausführt,
- die Verarbeitungseinrichtung (MH) die Ausführung eines Dienstes an die weitere Verarbeitungseinrichtung (IAC) meldet.

12. Verfahren nach Anspruch 11,
**dadurch gekennzeichnet, dass**
die Dienste Daten und/oder Statusinformationen und/oder Fehlermeldungen zum Hauptrechner (S) laden.

13. Verfahren nach Anspruch 11 oder 12,
**dadurch gekennzeichnet, dass**
die Anforderung eines Dienstes durch eine als interaktives Gerät ausgebildete industrielle Steuerung (G) mit Benutzerschnittstelle (HMI) erfolgt.

14. Verfahren nach einem der Ansprüche 11 bis 13,
**dadurch gekennzeichnet, dass**
die Dienste durch Skriptsprachen definiert werden und die Verarbeitungseinrichtung (MH) und die weitere Verarbeitungseinrichtung (IAC) Mittel (HTML-I, JS-I) zum Ausführen der Skripts enthalten.

15. Verfahren nach einem der Ansprüche 11 bis 14,
**dadurch gekennzeichnet, dass**
die Daten und/oder Dienste in Abhängigkeit des Zustandsder industriellen Steuerung (G) angefordert werden.

16. Verfahren nach einem der Ansprüche 11 bis 15,
**dadurch gekennzeichnet, dass**
die Bereitstellung der Daten und/oder Dienste ereignisgesteuert erfolgt.

## Claims

1. System for the computer-aided provision of data and/or services for appliances (G), comprising:
- at least one main computer (S) having means for storing and providing the data and/or services,
- at least one appliance (G) having the following features:
- the appliance (G) contains a first processing device (MH) having means (JS-I) for executing scripts, and
- a second processing device (IAC) having means (HTML-I) for displaying data and/or for user interaction (HMI), where the second processing device (IAC) is connected to the main computer (S) by means of a first bidirectional data communication link (KV2, I, KV3),
the services being defined in the form of scripts and comprising a unique identifier for the appliance (G),
**characterized in that**
the appliance (G) is an industrial controller,
and **in that** the first processing device (MH) is connected to the main computer (S) by means of a second bidirectional data communication link (KV4, I, KV3),
and **in that** the first processing device (MH) is configured such that it automatically requests data and/or services from the main computer (S), with the request being made under time control, and that it informs the second processing device (IAC) about the end of its activities for a particular task.

2. System according to claim 1,
**characterized in that**
the industrial controller (G) has means (JS-I, HTML-I) for actively requesting services from the main computer (S).

3. System according to claim 1 or 2,
**characterized in that**
the industrial controller (G) is in the form of an interactive appliance (HMI) having an input apparatus and an output apparatus.

4. System according to one of claims 1 to 3,
**characterized in that**
the industrial controller requests the data and/or services on the basis of the state of the industrial controller (G).

5. System according to one of claims 1 to 4,
**characterized in that**
the data and/or services are provided under event control.

6. Industrial controller (G) for executing services which can be provided via a main computer (S), having the following features:
- a first processing device (MH) having means (JS-I) for executing scripts and
- a second processing device (IAC) having means (HTML-I) for displaying data and/or for user interaction (HMI), where the second processing device (IAC) is connected to the main computer (S) by means of a first bidirectional data communication link (KV2, I, KV3),
the services being defined in the form of scripts and comprising a unique identifier for the industrial controller (G),
**characterized in that**
the first processing device (MH) is connected to the main computer (S) by means of a second bidirectional data communication link (KV4, I, KV3),
and **in that** the first processing device (MH) is configured such that it automatically requests data and/or services from the main computer (S), with the request being made under time control, and that it informs the second processing device (IAC) about the end of its activities for a particular task.

7. Industrial controller (G) according to claim 6,
**characterized in that**
the industrial controller (G) has means (JS-I, HTML-I) for actively requesting services from the main computer (S).

8. Industrial controller (G) according to one of claims 6 or 7,
**characterized in that**
the industrial controller is in the form of an interactive appliance (HMI) having an input apparatus and an output apparatus.

9. Industrial controller (G) according to one of claims 6 to 8,
**characterized in that**
the data and/or services are requested on the basis of the state of the industrial controller (G).

10. Industrial controller (G) according to one of claims 6 to 9,
**characterized in that**
the data and/or services are provided under event control.

11. Method for the computer-aided provision and/or execution of data and/or services for an industrial controller, where a main computer (S) and, at the industrial controller end, a processing device (MH) and a further processing device (IAC) communicate via data communication links (I, KV1-KV6) and the service comprises a unique identifier of the industrial controller (G), having the following method steps:
- the industrial controller (G) makes an automatic request to the main computer (S) for the provision of data and/or services, in which the request is provided under time control,
- the main computer (S) uses a first bidirectional data communication link (KV2, I, KV3) to send the further processing device (IAC) data which the latter analyzes and forwards to the processing device (MH) and/or to a user terminal (HMI),
- the processing device (MH) analyzes the received data,
**characterized in that**
- the processing device (MH) takes these data as a basis for requesting appropriate services from the main computer (S) via a second bidirectional data communication link (KV4, I, KV3),
- the main computer (S) loads the services onto the processing device (MH) via the second bidirectional data communication link (KV4, I, KV3),
- the processing device (MH) executes the services,
- the processing device (MH) reports the execution of a service to the further processing device (IAC).

12. Method according to claim 11,
**characterized in that**
the services load data and/or status information and/or error messages for the main computer (S).

13. Method according to claim 11 or 12,
**characterized in that**
a service is requested by an industrial controller (G) having a user interface (HMI), in the form of an interactive appliance.

14. Method according to one of claims 11 to 13,
**characterized in that**
the services are defined by script languages, and the processing device (MH) and the further processing device (IAC) contain means (HTML-I, JS-I) for executing the scripts.

15. Method according to one of claims 11 to 14,
**characterized in that**
the data and/or services are requested on the basis of the state of the industrial controller (G).

16. Method according to one of claims 11 to 15,
**characterized in that**
the data and/or services are provided under event control.

## Revendications

1. Système pour la fourniture, assistée par ordinateur, de données et/ou services à des appareils (G), constitué de :
- au moins un ordinateur principal (S) avec des moyens pour la mémorisation et la fourniture des données et/ou services,
- au moins un appareil (G) ayant les caractéristiques suivantes :
- l'appareil (G) comporte un premier dispositif de traitement (MH) ayant des moyens (JS-I) pour l'exécution de scripts, et
- un deuxième dispositif de traitement (IAC) ayant des moyens (HTML-I) pour la présentation de données et/ou pour l'interaction avec l'utilisateur (HMI), le deuxième dispositif de traitement (IAC) étant relié à l'ordinateur principal (S) par l'intermédiaire d'une première liaison de communication de données bidirectionnelle (KV2, I, KV3),
les services étant définis sous forme de scripts et contenant un identificateur univoque de l'appareil (G),
**caractérisé par le fait que**
l'appareil (G) est un automate industriel,
et le premier dispositif de traitement (MH) est relié à l'ordinateur principal (S) par l'intermédiaire d'une deuxième liaison de communication de données bidirectionnelle (KV4, I, KV3),
et le premier dispositif de traitement (MH) est configuré de telle sorte qu'il demande automatiquement des données et/ou services à l'ordinateur principal (S), la demande étant effectuée suivant une commande temporelle, et qu'il informe le deuxième dispositif de traitement (IAC) de la fin de ses activités pour une certaine tâche.

2. Système selon la revendication 1,
**caractérisé par le fait que** l'automate industriel (G) comporte des moyens (JS-I, HTML-I) pour demander activement des services à l'ordinateur principal (S).

3. Système selon la revendication 1 ou 2,
**caractérisé par le fait que** l'automate industriel (G) est conçue comme un appareil interactif (HMI) avec dispositif d'entrée et dispositif de sortie.

4. Système selon l'une des revendications 1 à 3,
**caractérisé par le fait que**, du côté de l'automate industriel, la demande des données et/ou services s'effectue en fonction de l'état de l'automate industriel (G).

5. Système selon l'une des revendications 1 à 4,
**caractérisé par le fait que** la fourniture des données et/ou services est effectuée suivant une commande par événements.

6. Unité d'automate industriel (G) pour l'exécution de services qui peuvent être fournis par l'intermédiaire d'un ordinateur principal (S), avec les caractéristiques suivantes :
- un premier dispositif de traitement (MH) avec des moyens (JS-I) pour l'exécution de scripts et
- un deuxième dispositif de traitement (IAC) avec des moyens (HTML-I) pour la présentation de données et/ou pour l'interaction avec l'utilisateur (HMI), le deuxième dispositif de traitement (IAC) étant relié à l'ordinateur principal (S) par l'intermédiaire d'une première liaison de communication de données bidirectionnelle (KV2, I, KV3),
les services étant définis sous forme de scripts et contenant un identificateur univoque de l'automate industriel (G),
**caractérisée par le fait que**
le premier dispositif de traitement (MH) est relié à l'ordinateur principal (S) par l'intermédiaire d'une deuxième liaison de communication de données bidirectionnelle (KV4, I, KV3),
et le premier dispositif de traitement (MH) est configuré de telle sorte qu'il demande automatiquement des données et/ou services à l'ordinateur principal (S), la demande étant effectuée suivant une commande temporelle, et qu'il informe le deuxième dispositif de traitement (IAC) de la fin de ses activités pour une certaine tâche.

7. Unité d'automate industriel (G) selon la revendication 6,
**caractérisée par le fait que** l'automate industriel (G) comporte des moyens (JS-I, HTML-I) pour demander activement des services à l'ordinateur principal (S).

8. Unité d'automate industriel (G) selon la revendication 6 ou 7,
**caractérisée par le fait que** l'automate industriel est conçue comme un appareil interactif (HMI) avec dispositif d'entrée et dispositif de sortie.

9. Unité d'automate industriel (G) selon l'une des revendications 6 à 8,
**caractérisée par le fait que** la demande des données et/ou services s'effectue en fonction de l'état de l'automate industriel (G).

10. Unité d'automate industriel (G) selon l'une des revendications 6 à 9,
**caractérisée par le fait que** la fourniture des données et/ou services est effectuée suivant une commande par événements.

11. Procédé pour la fourniture et/ou l'exécution, assistées par ordinateur, de données et/ou services pour un automate industriel, un ordinateur principal (S) ainsi que, du côté de l'automate industriel, un dispositif de traitement (MH) et un autre dispositif de traitement (IAC) communiquant par l'intermédiaire de liaisons de communication de données (I, KV1 à KV6) et le service contenant un identificateur univoque de l'automate industriel (G), avec les étapes de procédé suivantes :
- l'automate industriel (G) effectue automatiquement une demande à l'ordinateur principal (S) pour la fourniture de données et/ou services, la demande étant effectuée suivant une commande temporelle,
- l'ordinateur principal (S) envoie des données, par l'intermédiaire d'une première liaison de communication de données bidirectionnelle (KV2, I, KV3), à l'autre dispositif de traitement (IAC) qui analyse ces données et les retransmet au dispositif de traitement (MH) et/ou à un terminal d'utilisateur (HMI),
- le dispositif de traitement (MH) analyse les données reçues,
**caractérisé par le fait que**
- sur la base de ces données, le dispositif de traitement (MH) demande des services correspondants à l'ordinateur principal (S) par l'intermédiaire d'une deuxième liaison de communication de données bidirectionnelle (KV4, I, KV3),
- l'ordinateur principal (S) charge les services, par l'intermédiaire de la deuxième liaison de communication de données bidirectionnelle (KV4, I, KV3), sur le dispositif de traitement (MH),
- le dispositif de traitement (MH) exécute les services,
- le dispositif de traitement (MH) signale l'exécution d'un service à l'autre dispositif de traitement (IAC).

12. Procédé selon la revendication 11,
**caractérisé par le fait que** les services chargent des données et/ou des informations d'état et/ou des messages d'erreur vers l'ordinateur principal (S).

13. Procédé selon la revendication 11 ou 12,
**caractérisé par le fait que** la demande d'un service est effectuée par un automate industriel (G) qui est conçue comme un appareil interactif et qui a une interface d'utilisateur (HMI).

14. Procédé selon l'une des revendications 11 à 13,
**caractérisé par le fait que** les services sont définis par des langages de scripts et que le dispositif de traitement (MH) ainsi que l'autre dispositif de traitement (IAC) contiennent des moyens (HTML-I, JS-I) pour l'exécution des scripts.

15. Procédé selon l'une des revendications 11 à 14,
**caractérisé par le fait que** les données et/ou services sont demandés en fonction de l'état de l'automate industriel (G).

16. Procédé selon l'une des revendications 11 à 15,
**caractérisé par le fait que** la fourniture des données et/ou services est effectuée suivant une commande par événements.
